# EUROPÄISCHE PATENTSCHRIFT

(11) **EP 3 303 193 B1**
(45) Veröffentlichungstag und Bekanntmachung des Hinweises auf die Patenterteilung: **23.08.2023**
(21) Anmeldenummer: 16727643.5
(22) Anmeldetag: 19.05.2016
(51) Int. Cl.: B65G 35/04, B65G 54/02

(54) **TRANSPORTVORRICHTUNG MIT MOVER UND SCHUTZVORRICHTUNG AUF DER ANTRIEBSFLÄCHE**
TRANSPORT SYSTEM WITH LINEAR MOTORS AND PROTECTION COVER ON THE DRIVING SURFACE
SYSTEME DE TRANSPORT COMPRENANT DES PLATEFORMES MOBILES MAGNÉTIQUES ET UNE COUCHE PROTECTRICE POUR LA SURFACE D'ENTRAÎNEMENT

(30) Priorität: 26.05.2015 DE 102015209610
(43) Veröffentlichungstag der Anmeldung: 11.04.2018
(73) Patentinhaber: Syntegon Technology GmbH, 71332 Waiblingen (DE); Syntegon Packaging Systems AG, 8222 Beringen (CH)
(72) Erfinder: WIPF, Alfred, 79798 Jestetten (DE); RAATZ, Heike, 70372 Stuttgart (DE)
(74) Vertreter: Daub, Thomas
(86) Internationale Anmeldenummer: PCT/EP2016/061224
(87) Internationale Veröffentlichungsnummer: WO 2016/188841

(56) Entgegenhaltungen:
- EP-A1- 3 031 755
- EP-B1- 3 031 755
- WO-A1-2013/059934
- WO-A2-2008/116857
- GB-A- 2 228 241
- US-A- 4 205 536
- US-A1- 2002 113 496
- US-A1- 2003 230 941

## Beschreibung

Die Erfindung geht aus von einer Transportvorrichtung nach der Gattung des unabhängigen Anspruchs.

### Stand der Technik

Aus der WO 2011/138448 ist bereits ein System zum Transportieren von Behältern zwischen unterschiedlichen Stationen bekannt, wobei die Behälter in Behälterträgern aufgenommen sind. Das System umfasst eine Steuereinheit, die den Transport der Behälterträger steuert, eine Transportfläche, die in Teilflächen unterteilt ist und auf der die Behälterträger beweglich anordenbar sind, und Antriebsmittel, wobei die Antriebsmittel durch die Steuereinheit angesteuert sind. Dieses System zeichnet sich durch hohe Flexibilität aus, wie sie insbesondere zum Transport von Probenbehältern eines Laboranalysesystems gefordert ist.

Aus der DE 10 2007 025 822 A1 ist bereits ein kombinierbares Flächenelement mit einer Vielzahl von ansteuerbaren Wandlerelementen bekannt. Die mit der Vorrichtung gestalteten elektromagnetischen Kraftfelder dienen der gesteuerten Kraftwirkung für Bewegung von entsprechend ausgelegten Objekten. Bei den so bewegten Objekten kann es sich um eine Transportvorrichtung handeln, welche mehrere Rollelemente trägt zur Durchführung insbesondere logistischer Aufgaben.

Des Weiteren sind aus WO 2013/059934 A1, WO 2008/116857 A2 und US 2003/230941 A1 bereits Transportvorrichtungen bekannt, die zumindest einen Mover umfassen. US 2002/113496 A1 offenbart eine Transportvorrichtung, umfassend zumindest einen Mover, der zumindest einen Magneten, umfasst und der mit einer einer Antriebsfläche zusammenwirkt, so dass der Mover gegenüber der Antriebsfläche in zumindest zwei Freiheitsgraden verschiebbar und/oder drehbar bewegt werden kann, wobei zumindest eine als Platte ausgebildete ; Schutzvorrichtung vorgesehen ist, die zwischen Antriebsfläche und Mover angeordnet ist.

Der Erfindung liegt die Aufgabe zugrunde, die gattungsgemäße Transportvorrichtung insbesondere hinsichtlich Reinigbarkeit weiter zu optimieren, insbesondere zum Einsatz in hygienisch sensiblen Bereichen. Diese Aufgabe wird gelöst durch die Merkmale der unabhängigen Ansprüche.

### Vorteile der Erfindung

Die erfindungsgemäße Vorrichtung mit den Merkmalen der unabhängigen Ansprüche hat demgegenüber den Vorteil, dass sie weitgehend unempfindlich gegenüber Verschmutzungen ist. Hierzu ist zumindest eine Schutzvorrichtung vorgesehen, die zwischen Antriebsfläche und Mover angeordnet ist. Damit kann die Antriebsfläche zuverlässig mechanisch geschützt werden. Es erfolgt eine dichte Versiegelung der Antriebsfläche, wie dies für hygienische Anforderungen in der Pharma- oder Lebensmittelindustrie notwendig sein kann. Die Sicherungsvorrichtung erlaubt eine klare Trennung zwischen der Maschinenseite bzw. Stator (Ölbereich) und dem Produktionsraum, in dem sich die Mover befinden. Dank dieser Trennung kann der Produktionsraum ja nach Applikation als Reinraum, Sterilraum oder Raum mit einer bestimmten Hygieneklasse ausgebildet sein, wie dies gerade für Verpackungsmaschinen für die pharmazeutische Industrie von großer Bedeutung ist. Dank der Schutzvorrichtung können Installationen im statorseitigen Maschinenbereich vorgenommen werden, ohne den Produktionsraum zu öffnen. Damit müsste nicht mehr die gesamte Anlage stillgesetzt werden. Außerdem überdeckt die Schutzvorrichtung Spalten, die beim Zusammenbau modular aufgebauter Antriebsflächen entstehen könnten. Dadurch verbessert sich die Reinigbarkeit. Auch Bakterienherde, die sich in Spalten bilden können, werden im Produktionsraum reduziert. Die Schutzvorrichtung verbessert darüber die Reinigbarkeit der Vorrichtung, die nun im sog. Wash down- Verfahren vorgenommen werden kann. Die Schutzvorrichtung dämpt darüber hinaus Schwingungen und eventuelle (Lauf)geräusche. Zudem kann eine prozesssichere Detektion von festen Schmutzablagerungen erfolgen. Auch die Wartungskosten sind entsprechend gering.

Erfindungsgemäß ist vorgesehen, dass die Schutzvorrichtung als bewegbares Band ausgebildet ist. In einer zweckmäßigen Weiterbildung ist vorgesehen, dass die Schutzvorrichtung austauschbar ausgebildet ist. Zwischen Stator und Mover befindliche nichtmetallische Elemente (bspw. Krümel) können durch die austauschbare und/oder bewegbare Schutzvorrichtung weggenommen oder wegtransportiert werden. Bei einer Schutzvorrichtung, welche beispielsweise quer zur Transportrichtung bewegt werden kann, können Mover während des Betriebes übergangslos ausgeschleust und eingschleust werden, ohne dass die Mover spezielle Auflageflächen benötigen. An der Kante des Planarantriebes übernimmt die bewegliche Schutzvorrichtung quasi als Zwischenboden den Transport der Mover. Dies ist kostengünstiger als das Vorsehen weitere Planarmodule.

Erfindungsgemäß ist vorgesehen, dass die Schutzvorrichtung als Folie oder Platte ausgebildet ist. Diese Ausgestaltung ist kostengünstig und erlaubt gerade bei einer Folie ein einfaches Austauschen der Schutzvorrichtung.

Erfindungsgemäßist zumindest ein Bewegungsmittel vorgesehen zur Bewegung der Schutzvorrichtung. Damit lässt sich ein Austausch oder Reinigen der Schutzvorrichtung automatisch oder halbautomatisch vornehmen. Das Bedienpersonal kann dadurch weiter unterstützt werden.

In einer zweckmäßigen Weiterbildung ist zumindest ein Fixiermittel, insbesondere zumindest eine Öffnung zur Einwirkung eines Unterdrucks auf die Schutzvorrichtung, im Bereich der Antriebsfläche vorgesehen, über das die Schutzvorrichtung fixiert werden kann. Damit kann gerade eine flexible Schutzvorrichtung wie eine Folie in ihrer definierten Position gehalten werden, so dass keine verschmutzungsanfälligen Falten oder Spalten entstehen können.

In einer zweckmäßigen Weiterbildung ist zumindest eine Reinigungsvorrichtung vorgesehen zur Reinigung der Schutzvorrichtung. Damit lässt sich die Schutzvorrichtung nach erfolgter Reinigung für einen weiteren Produktionsprozess erneut verwenden.

In einer zweckmäßigen Weiterbildung ist zumindest eine Rolle vorgesehen, auf der ein Teil der Schutzvorrichtung aufgewickelt ist, während der andere Teil der Schutzvorrichtung die Antriebsfläche zumindest teilweise überdeckt. Damit lässt sich platzsparend ein schnelles Austauschen der Schutzvorrichtung erreichen, da durch einfaches Abrollen ein neuer, sauberer Abschnitt der Schutzvorrichtung die Antriebsfläche überdeckt.

In einer erfindungsgemäßen Ausgestaltung ist vorgesehen, dass die Schutzvorrichtung umlaufend ausgebildet ist. Gerade in Verbindung mit einer Reinigungsvorrichtung lässt sich ein kontinuierlich bewegbares, wiederverwendbares Reinigungskonzept realisieren.

In einer zweckmäßigen Weiterbildung ist vorgesehen, dass zumindest ein Mover Mittel zum Bewegen der Schutzvorrichtung umfasst. Besonders zweckmäßig umfasst zumindest ein Mover zumindest ein Fixiermittel zur Fixierung der Schutzvorrichung. Damit kann der Mover selbst eine Relativbewegung der Schutzvorrichtung relativ zur Antriebsfläche bzw. Stator herbeiführen. Weitere Bewegungsmittel sind damit nicht mehr notwendig. Hierzu fixiert der Mover die Schutzvorrichtung, so dass eine Bewegung des Movers die genannte Relativbewegung der Schutzvorrichtung bewirkt.

In einer zweckmäßigen Weiterbildung ist vorgesehen, dass die Schutzvorrichtung, insbesondere deren Oberfläche, ein leicht sterilisierbares Material, vorzugsweise Kunststoff, insbesondere Polyetherimit und/oder Polyetherketon und/oder Polyetheretherketon enthält. Diese Werkstoffe zeichnen sich durch gute Reinigbarkeit aus und sind gerade zur Sterilisierung mit verschiedenen Verfahren geeignet. Sie eignen sich somit besonders für die Verwendung in der Pharma- oder Nahrungsmittelverpackung.

In einer zweckmäßigen Weiterbildung erfolgt eine Detektierung von anhaftenden Verunreinigungen auf der Oberfläche der Schutzvorrichtung durch Überwachung eines Abstands zwischen Mover und Antriebsfläche. Ohne zusätzliche Sensoren oder ähnliches kann auf besonders einfache Art der Reinigungsbedarf ermittelt werden.

In einer zweckmäßigen Weiterbildung ist vorgesehen, dass die Antriebsfläche zumindest eine Parkzone umfasst, die sich durch Mittel auszeichnet, die eine geringere magnetische Kraft auf den Mover aufbringen können. Besonders bevorzugt umfasst die Antriebsfläche zumindest eine Parkzone mit einer separaten Schutzvorrichtung. Dadurch wird in einfacher Weise der Austausch der Schutzvorrichtung möglich, da die Mover in den Parkbereich gebracht werden können, wo sie den Wechsel der Schutzvorrichtung nicht behindern. In diesem Bereich können zudem die Mover beispielsweise zu Wartungszwecken oder ähnliches leicht von der Antriebsfläche entfernt werden.

Weitere zweckmäßige Weiterbildungen ergeben sich aus weiteren abhängigen Ansprüchen und aus der Beschreibung.

### Zeichnung

Ausführungsbeispiele der erfindungsgemäßen Vorrichtung sind in der Zeichnung dargestellt und werden nachfolgend näher beschrieben.

Es zeigen:
Die Figur 1 eine Systemdarstellung der Vorrichtung,
die Figur 2 eine Seitenansicht mit nicht erfindungsgemäßer, feststehender Schutzvorrichtung,
die Figur 3 eine Seitenansicht mit bewegbarer Schutzvorrichtung,
die Figur 4 eine Seitenansicht mit abtrennbarer Schutzvorrichtung,
die Figur 5 eine Seitenansicht mit von einem Mover bewegbaren Schutzvorrichtung,
die Figur 6 eine Seitenansicht mit Fixiermitteln für die Schutzvorrichtung sowie
die Figur 7 eine Seitenansicht einer umlaufenden Schutzvorrichtung mit Reinigungsvorrichtung.

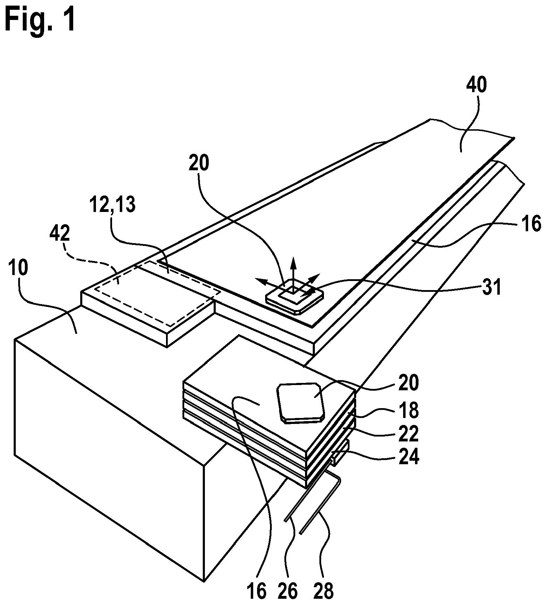

Im Ausführungsbeispiel gemäß Figur 1 ist ein Mover 20 dargestellt mit einer rechteckförmigen Grundform. Eine Trägerplatte 12 bzw. Antriebsfläche 13 besteht aus mehreren Einzelteilen bzw. Kacheln 16. Die Kacheln 16 sind quadratisch bzw. rechteckförmig ausgebildet. Die Kacheln 16 besitzen im Wesentlichen eine planare Oberfläche und sind schichtweise aufgebaut. So umfasst die Kachel 16 eine Spulenebene 18, eine Sensorebene 22 sowie eine Leistungselektronikebene 24. Weiterhin ist ein Bus-System 26 vorgesehen, welches die Kacheln 16 mit einem nicht dargestellten Zentralrechner bzw. Prozessor verbindet. Außerdem ist eine Spannungsversorgung 28 vorgesehen mit zugehörigen Anschlüssen, über die die Leistungselektronikebene 24 bzw. die Spulenebene 18 und/oder die Sensorebene 22 mit Energie versorgt werden kann. Eine Grundplattform 10 beschreibt das Basiselement, worunter der Systemträger bzw. ein Maschinengestell verstanden wird. Die Grundplattform 10 kann bereits Steuerungskomponenten und Leistungselektronik aufnehmen. Optional könnte auch bereits die Trägerplatte 12 bzw. Antriebsfläche 13 Bestandteil der Grundplattform 10 sein. Auf der Oberfläche der Grundplattform 10 sind auf der Antriebsfläche 13 die relativ hierzu beweglichen Mover 20 angeordnet. Hierzu erzeugt die Antriebsfläche 13 bzw. die Trägerplatte 12 eine Antriebskraft, die auf den Mover 20 wirkt und ihn in die gewünschte Bewegung versetzt. Die stationäre Antriebsfläche 13 ist vorzugsweise planar ausgeführt. Der Mover 20 ist so angesteuert, dass er zumindest in zwei Freiheitsgraden verschiebbar und/oder drehbar ist. Damit lassen sich unterschiedliche Positionen in flexibler Weise anfahren.

Der Mover 20 beschreibt das bewegbare Element der Vorrichtung. Zum einen dient der Mover 20 der Erzeugung einer Relativbewegung gegenüber der Trägerplatte 12 bzw. Antriebsfläche 13. Weiterhin erzeugt der Mover 20 eine Kraft gegenüber der Trägerplatte 12 bzw. Antriebsfläche 13. Hierzu umfasst der Mover 20 zumindest ein Mittel zur Erzeugung eines Magnetfelds, insbesondere Magnete, vorzugsweise einen Permanentmagneten 19, der mit einem Wanderfeld erzeugenden Spulen 18 der Trägerplatte 12 bzw. der Antriebsfläche 13 zur Bewegungserzeugung zusammenwirkt. Hierbei wird ein Luftspalt zwischen der Trägerplatte 12 bzw. der Antriebsfläche 13 und dem Mover 20 ausgebildet, so dass eine berührungslose Bewegung des Movers 20 relativ zur Antriebsfläche 13 erfolgen kann. Weiterhin kann der Mover 20 Mittel zur Erkennung einer Position aufweisen. In Figur 1 ist eine Schutzvorrichtung 40 angedeutet, die über die Antriebsfläche 13 gelegt werden kann. Gestrichelt ist weiterhin im vorderen Bereich der Antriebsfläche 13 eine Parkzone 42 skizziert.

Für die Konstanthaltung der Moverluftspalte ist es erforderlich, die magnetischen Feldstärken der von den Movern 20 temporär überdeckten Magnetspulen 18 lastabhängig, individuell anzupassen. Für die Feldregelung können zur Erfassung der aktuellen Luftspalte gestellfeste Hallsensoren vorgesehen sein. Die aktuellen Moverpositionen können vorzugsweise durch geeignete berührungslose Linearmesssysteme in x- und y-Richtung mit einer Auflösung von 0,01 mm und extrem kleiner Taktzeit absolut bestimmt werden. Hierzu können in der Kachel 16 entsprechende Positionssensoren 22 vorgesehen sein.

Bei Kontrollfahrten mit niedriger Geschwindigkeit und möglichst kleinen Kippmomenten lassen sich anhaftende Verunreinigungen an der Statoroberfläche über kontinuierliche Messung der Moverluftspalte prozesssicher identifizieren.

Zum Austausch der Schutzvorrichtung 40 werden alle Mover 20 in eine mit einem unabhängigen, nicht mit der Schutzvorrichtung 40 verbundenen, Schutzvorrichtungsstreifen abgedeckte Parkzone 42 verfahren. Die Schutzvorrichtung 40 kann dann bei abgeschaltetem Unterdruck oder Vakuum problemlos ausgetauscht werden. Zur Erleichterung des Moveraustauschs und sicheren Vermeidung der Quetschgefahr sind die Eisenrückschlüsse der gestellfesten Magnetspulen 18 im Bereich der Parkzone 42 deutlich schwächer ausgebildet als in den Bereichen der aktiven Antriebsflächen 13.

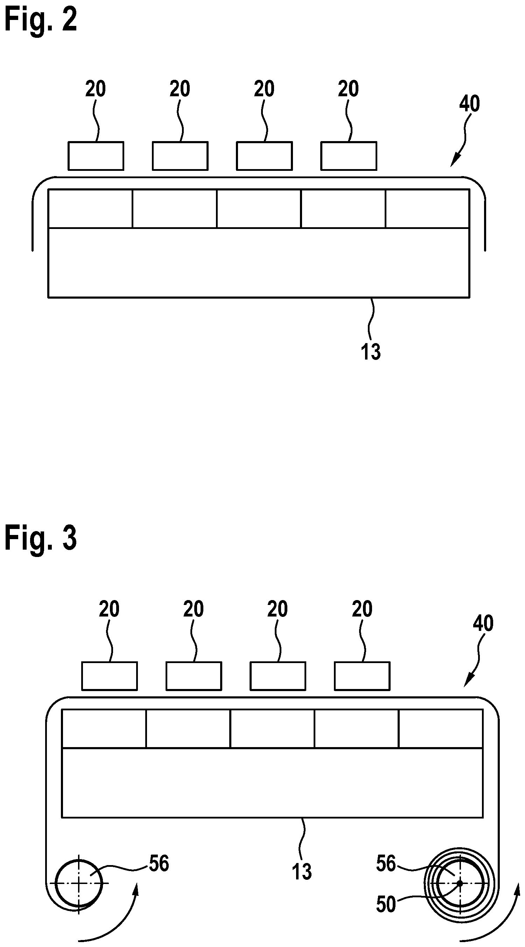

Bei dem Ausführungsbeispeil gemäß Figur 2 überdeckt die Schutzvorrichtung 40 die Antriebsfläche 13 bzw. den Stator. Als Schutzvorrichtung 40 wird eine feste Platte oder eine bewegliche Folie gelegt bzw. gespannt. Die Schutzvorrichtung 40 kann fest oder beweglich sein. Hierfür eignet sich insbesondere ein nichtmetallisches und/oder nicht-magnetisches Material. Zum Schutz der empfindlichen Oberfläche der Antriebsfläche 13 (Stator) ist eine als Verschleißteil ausgebildete ca. 1 mm dicke sterilisierbare Schutzvorrichtung 40, vorzugsweise eine Folie, insbesondere aus Kunststoff vorgesehen. Die Folie kann besonders bevorzugt aus Polyetherimid (PEI) bestehen. Bei einer festen Ausbilung könnte die Schutzvorrichtung 40 aus dünnem rostfreien Blech (nichtmagnetisch) bestehen. Auch könnte eine dünne Platte beispielsweise aus Polyetherketon (kurz PEK) oder Polyetheretherketon (PEEK) bestehen.Mit Blick auf übliche Sterilisationsverfahren sollte das Material auch eine entsprechende Temperaturbeständigkeit aufweisen.

Das Ausführungsbeispiel gemäß Figur 3 zeichnet sich durch ein Bewegungsmittel 50 aus, das die Schutzvorrichtung 40 bewegen kann. Hierbei könnte die flexible Schutzvorrichtung 40 in Verbindung mit zwei seitlich angeordneten Rollen 56 auf- und abgewickelt werden. Das Bewegungmittel 50 wie ein üblicher konventioneller Antrieb dreht zumindest eine der Rollen 56, auf der dann die Schutzvorrichtung 40 weiter aufgerollt wird. So bewegt sich das Schutzmittel 40 parallel zur Antriebsfläche 13. Neben dem Schutz des Stators bzw. Antriebsfläche 13 dient dies insbesondere der Entfernung von Schmutzpartikeln.

Im Fall der beweglichen Schutzvorrichtung 40 kann diese über die Statorfläche bzw. Antriebsfläche 13 bewegt werden. Dabei werden die auf der Schutzvorrichtung 40 befindlichen Partikel von der Statorfläche entfernt. Die bewegliche Schutzvorrichtung 40 kann außerdem genutzt werden, bei Maschinenstillstand die Mover 20 aus der Maschine bzw. zu einer Ausgabeöffnung zu transportieren. Der Maschinenbediener muss somit vorteilhafter Weise nicht die Zugänglichkeit zum kompletten Transportbereich haben. Die bewegliche Schutzvorrichtung 40 kann auch dazu benutzt werden, einzelne oder mehrere Mover 20 übergangslos einzuschleusen oder auszuschleusen aus dem Planarantriebsbereich.

Die bewegliche Schutzvorrichtung 40 kann ein breites Transportband sein, über dem sich nicht nur die magnetischen Mover 20 befinden, sondern auch nicht magnetische passive Elemente, die von dem Transportband bewegt werden bzw. von den magnetischen Movern 20 ge- oder verschoben werden können. Im bewegten wie im nicht-bewegten Fall wird die Statorfläche durch das die Schutzvorrichtung 40 gegenüber mechanischen Belastung geschützt. Außerdem schützt sie vor Staub, flüssigen und festem Schmutz.

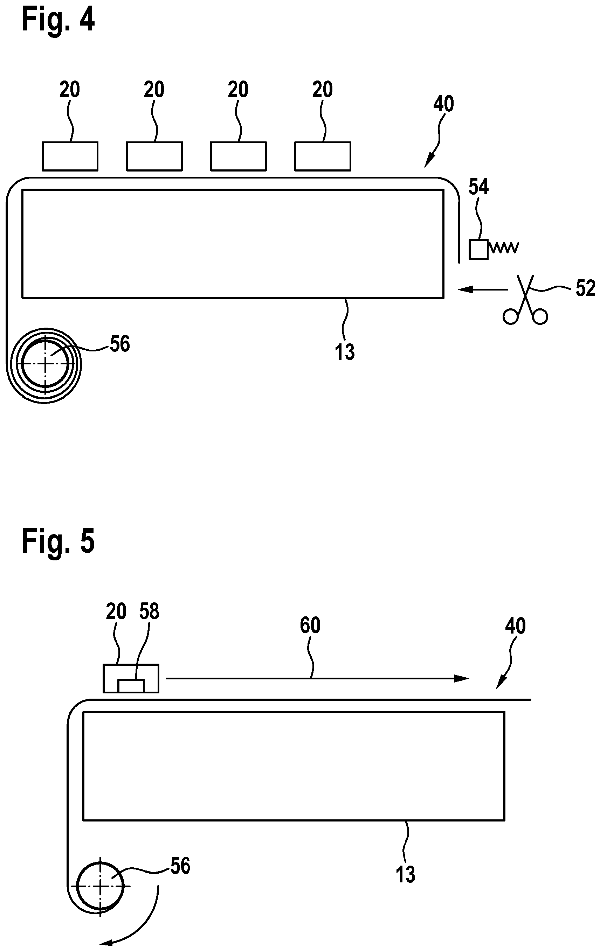

Das Ausführungsbeispiel gemäß Figur 4 umfasst eine bewegliche Schutzvorrichtung 40, welche an einem Ende nach einer Fixierung 54 von einem Schneidmittel 52 abgetrennt werden kann. Dies dient insbesondere einer Entfernung eines verschmutzen Teils des Schutzvorrichtung 40. Im laufenden Betrieb verhindert die Fixierung 54 ein Verrutschen der Schutzvorrichtung 40.

Bei dem Ausführungsbeispiel gemäß Figur 5 deckt die Schutzvorrichtung 40 wiederum den Stator bzw. die Antriebsfläche 13 ab. Zum Zwecke eines Austauschs der verschmutzten Schutzvorrichtung 40 kann nun der Mover 20 den Weitertransport der Schutzvorrichtung in Transportrichtung 60 übernehmen. Hierbei umfasst der Mover 20 zumindest ein Haltemittel 58 zur Fixierung der Schutzvorrichtung 40. Die Haltemittel 58 könnten beispielsweise durch Ansaugen bzw. Vakuum, magnetisch ober durch Klemmmittel eine kraft- und formschlüssige Verbindung mit der Schutzvorrichtung 40 herstellen.

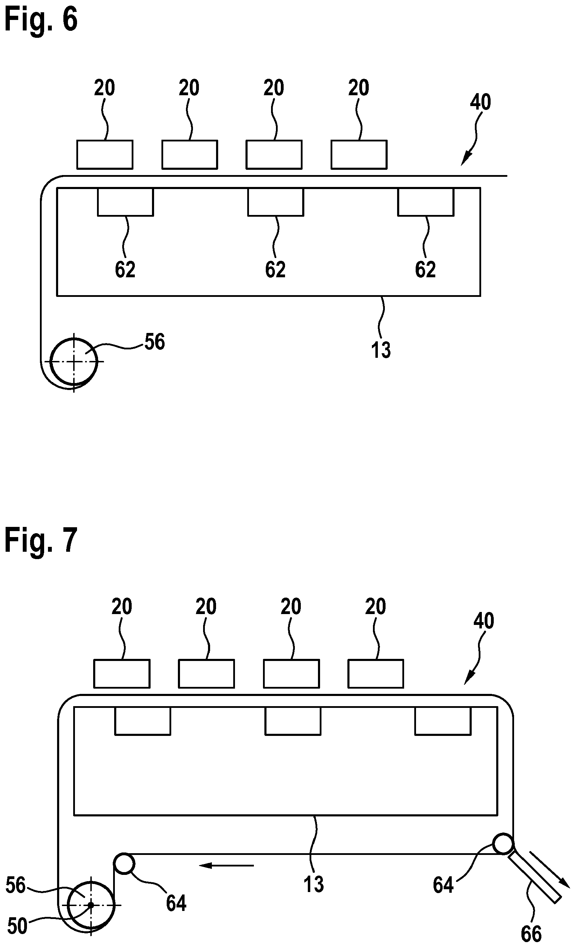

In dem Ausführungsbeispiel gemäß Figur 6 ist im Bereich der Antriebsfläche 13 bzw. des Stators zumindest eine Fixierung 62 für die Schutzvorrichtung 40 vorgesehen. Bevorzugt ist diese Fixierung 62 lösbar ausgebildet, um einen Austausch der Schutzvorrichtung zu ermöglichen. Die Fixierung 62 könnte mittels Vakuum, magnetisch oder mechanisch (Klemmen etc.) erfolgen. Die Schutzvorrichtung 40 kann über einen minimalen Unterdruck an die Oberfläche der Antriebsfläche 13 angesaugt werden. Beispielsweise Vakuumöffungen dienen als Fixiermittel 62 wie in Figur 6 angedeutet, um die Schutzvorrichtung 40 im laufenden Betrieb einerseits unverrückbar zu fixieren, andererseits jedoch einen Austausch zu ermöglichen. Bei Abschaltung des Planarantriebs wird die Schutzvorrichtung 40 durch die konservativen Lagerkräfte der Mover 20 unverrückbar fixiert.

Das Ausführungsbeispiel gemäß Figur 7 zeichnet sich durch eine umlaufende Schutzvorrichtung 40 aus, die die Oberseite der Antriebsfläche 13 abdeckt und unterhalb auf die andere Seite zurückgeführt wird. Hierzu sind zumindest ein Bewegungsmittel 50 und Umlenkungen 64 vorgesehen. Seitlich von der Antriebsfläche 13 befindet sich eine Reinigungsvorrichtung 66, die die Oberfläche der Schutzvorrichtung 40 von Schmutz befreit. Die gereinigte Oberfläche der Schutzvorrichtung 40 kann anschließend erneut zur Überdeckung der Antriebsfläche 13 verwendet werden.

Die Vorteile der vorstehend beschriebenen Statorversiegelung lassen sich wie folgt zusammenfassen. Es werden Verunreinigungen auf der Schutzvorrichtung 40 detektiert durch Überwachung der Moverluftspalte. Es erfolgt eine hermetisch dichte Versiegelung der Antriebsflächen 13. Die Schutzvorrichtung 40 ist leicht austauschbar. Außerdem ist die Antriebsfläche mechanisch geschützt. Die Schutzvorrichtung trägt bei mechanischen Führungen wie Stützrollen zu einem zusätzlicher Stabilisierungseffekt der Mover 20 bei durch die infolge anfänglicher plastischer Verformungen sich bildenden Spurrillen der Schutzvorrichtung 40. Dieser Umformprozess ist nach relativ kurzer Laufzeit bis zur Erreichung eines entsprechend vergrößerten Traganteils der Stützrollen abgeschlossen. Es werden Schwingungen und Laufgeräusche gedämpft.

Die Vorrichtung ist Bestandteil eines flexiblen Transportsystems für unterschiedliche Transportanwendungen, insbesondere in der Verpackungstechnik von beispielsweise Pharmazeutika oder Lebensmittel, sowohl feste wie auch flüssige Produkte. Die Verwendung ist hierauf jedoch nicht eingeschränkt.

## Patentansprüche

1. Transportvorrichtung, umfassend zumindest einen Mover (20), der zumindest einen Magneten (19), vorzugsweise Permanentmagnet, umfasst und der mit einer Antriebsfläche (13) zusammenwirkt, so dass der Mover (20) gegenüber der Antriebsfläche (13) in zumindest zwei Freiheitsgraden verschiebbar und/oder drehbar bewegt werden kann, wobei zumindest eine Schutzvorrichtung (40) vorgesehen ist, die zwischen Antriebsfläche (13) und Mover (20) angeordnet ist, **dadurch gekennzeichnet, dass** die Schutzvorrichtung als Folie ausgebildet ist, und zumindest ein Bewegungsmittel (50) vorgesehen ist zur Bewegung der Schutzvorrichtung (40).

2. Transportvorrichtung, umfassend zumindest einen Mover (20), der zumindest einen Magneten (19), vorzugsweise Permanentmagnet, umfasst und der mit einer Antriebsfläche (13) zusammenwirkt, so dass der Mover (20) gegenüber der Antriebsfläche (13) in zumindest zwei Freiheitsgraden verschiebbar und/oder drehbar bewegt werden kann, wobei zumindest eine als Platte ausgebildete Schutzvorrichtung (40) vorgesehen ist, die zwischen Antriebsfläche (13) und Mover (20) angeordnet ist, **dadurch gekennzeichnet, dass** zumindest ein Bewegungsmittel (50) vorgesehen ist zur Bewegung der Schutzvorrichtung (40).

3. Transportvorrichtung, umfassend zumindest einen Mover (20), der zumindest einen Magneten (19), vorzugsweise Permanentmagnet, umfasst und der mit einer Antriebsfläche (13) zusammenwirkt, so dass der Mover (20) gegenüber der Antriebsfläche (13) in zumindest zwei Freiheitsgraden verschiebbar und/oder drehbar bewegt werden kann, wobei zumindest eine Schutzvorrichtung (40) vorgesehen ist, die zwischen Antriebsfläche (13) und Mover (20) angeordnet ist, **dadurch gekennzeichnet, dass** die Schutzvorrichtung als bewegbares Band ausgebildet ist, und dass zumindest ein Bewegungsmittel (50) vorgesehen ist zur Bewegung der Schutzvorrichtung (40) und/oder dass die Schutzvorrichtung (40) umlaufend ausgebildet ist.

4. Vorrichtung nach einem der vorhergehenden Ansprüche, **dadurch gekennzeichnet, dass** die Schutzvorrichtung (40) austauschbar ausgebildet ist.

5. Vorrichtung nach einem der vorhergehenden Ansprüche, **dadurch gekennzeichnet, dass** zumindest ein Fixiermittel (62), insbesondere zumindest eine Öffnung zur Einwirkung eines Unterdrucks auf die Schutzvorrichtung (40), im Bereich der Antriebsfläche (13) vorgesehen ist, über das die Schutzvorrichtung (40) fixiert werden kann.

6. Vorrichtung nach Anspruch 1, **dadurch gekennzeichnet, dass** zumindest ein Schneidmittel (52) vorgesehen ist zum Durchtrennen der Schutzvorrichtung (40).

7. Vorrichtung nach Anspruch 1 oder 6, **dadurch gekennzeichnet, dass** zumindest eine Rolle (56) vorgesehen ist, auf der ein Teil der Schutzvorrichtung (40) aufgewickelt ist, während der andere Teil der Schutzvorrichtung (40) die Antriebsfläche (13) zumindest teilweise überdeckt.

8. Vorrichtung nach Anspruch 1 oder 2, oder nach einem der Ansprüche 4 bis 7, wenn abhängig von einem der Ansprüche 1 oder 2,
**dadurch gekennzeichnet,**
**dass** zumindest ein Mover (20) Mittel zum Bewegen der Schutzvorrichtung (40) umfasst.

9. Vorrichtung nach Anspruch 2, oder nach einem der Ansprüche 4 oder 5, wenn abhängig vom Anspruch 2, **dadurch gekennzeichnet, dass** zumindest ein Mover (20) zumindest ein Fixiermittel (58) umfasst zur Fixierung der Schutzvorrichung.

10. Vorrichtung nach einem der vorhergehenden Ansprüche, **dadurch gekennzeichnet, dass** die Schutzvorrichtung (40), insbesondere deren Oberfläche, ein leicht sterilisierbares Material, vorzugsweise Kunststoff, insbesondere Polyetherimit und/oder Polyetherketone und/oder Polyetheretherketon enthält.

11. Vorrichtung nach einem der vorhergehenden Ansprüche, **dadurch gekennzeichnet, dass** die Antriebsfläche (13) zumindest eine Parkzone (42) umfasst, die sich durch Mittel auszeichnet, die eine geringere magnetische Kraft auf den Mover (20) aufbringen können.

12. Vorrichtung nach einem der vorhergehenden Ansprüche, **dadurch gekennzeichnet, dass** die Antriebsfläche (13) zumindest eine Parkzone (42) umfasst, die nicht durch die Schutzvorrichtung (40) abgedeckt ist.

## Claims

1. Transport device, comprising at least one mover (20) which has at least one magnet (19), preferably a permanent magnet, and which acts together with a driving surface (13) in such a way that the mover (20) can be moved so as to be displaceable and/or rotatable in at least two degrees of freedom with respect to the driving surface (13),
wherein at least one protective device (40) is provided which is arranged between the driving surface (13) and the mover (20),
**characterised in that** the protective device is realized as a film and at least one movement member (50) is provided for moving the protective device (40).

2. Transport device, comprising at least one mover (20) which has at least one magnet (19), preferably a permanent magnet, and which acts together with a driving surface (13) in such a way that the mover (20) can be moved so as to be displaceable and/or rotatable in at least two degrees of freedom with respect to the driving surface (13),
wherein at least one protective device (40) is provided which is realized as a plate arranged between the driving surface (13) and the mover (20),
**characterised in that** at least one movement member (50) is provided for moving the protective device (40).

3. Transport device, comprising at least one mover (20) which has at least one magnet (19), preferably a permanent magnet, and which acts together with a driving surface (13) in such a way that the mover (20) can be moved so as to be displaceable and/or rotatable in at least two degrees of freedom with respect to the driving surface (13),
wherein at least one protective device (40) is provided which is arranged between the driving surface (13) and the mover (20),
**characterised in that** the protective device is realized as a movable belt and that at least one movement member (50) is provided for moving the protective device (40), and/or that the protective device (40) is realized in a circumferential manner.

4. Device according to one of the preceding claims,
**characterised in that** the protective device (40) is realized so as to be exchangeable.

5. Device according to one of the preceding claims,
**characterised in that** at least one fixing means (67), in particular at least one opening for a negative pressure acting on the protective device (40), via which the protective device (40) is fixable, is provided in the region of the driving surface (13).

6. Device according to claim 1,
**characterised in that** at least one cutting means (52) is configured for cutting through the protective device (40).

7. Device according to claim 1 or 6,
**characterised in that** at least one roll (56) is provided, which a portion of the protective device (40) is wound onto while the other portion of the protective device (40) covers the driving surface (13) at least partially.

8. Device according to claim 1 or 2, or according to one of claims 4 to 7 if depending on one of claims 1 or 2,
**characterised in that** at least one mover (20) comprises means for moving the protective device (40).

9. Device according to claim 2, or according to one of claims 4 or 5 if depending on claim 2,
**characterised in that** at least one mover (20) comprises at least one fixing means (58) for a fixing of the protective device.

10. Device according to one of the preceding claims,
**characterised in that** the protective device (40), in particular its surface, contains an easily sterilizable material, preferably a synthetic material, in particular polyetherimide and/or polyetherketone and/or polyetheretherketone.

11. Device according to one of the preceding claims,
**characterised in that** the driving surface (13) comprises at least one parking zone (42) featuring members which are capable of applying a smaller magnetic force to the mover (20).

12. Device according to one of the preceding claims,
**characterised in that** the driving surface (13) comprises at least one parking zone (42) which is not covered by the protective device (40).

## Revendications

1. Dispositif de transport, comprenant au moins un mouvant (20) qui comporte au moins un aimant (19), préférablement aimant permanent, et qui coopère avec une surface d'entraînement (13) de sorte que le mouvant (20) puisse être mu tel qu'il soit déplaçable et/ou tournable en au moins deux degrés de liberté par rapport à la surface d'entraînement (13),
où au moins un dispositif protectif (40) est pourvu qui est agencé entre la surface d'entraînement (13) et le mouvant (20),
**caractérisé en ce que** le dispositif protectif est réalisé comme feuille et au moins un moyen de mouvement (50) est destiné pour un mouvement du dispositif protectif (40).

2. Dispositif de transport, comprenant au moins un mouvant (20) qui comporte au moins un aimant (19), préférablement aimant permanent, et qui coopère avec une surface d'entraînement (13) de sorte que le mouvant (20) puisse être mu tel qu'il soit déplaçable et/ou tournable en au moins deux degrés de liberté par rapport à la surface d'entraînement (13),
où au moins un dispositif protectif (40) est pourvu qui est réalisé comme plaque et est agencé entre la surface d'entraînement (13) et le mouvant (20),
**caractérisé en ce qu'**au moins un moyen de mouvement (50) est destiné pour un mouvement du dispositif protectif (40).

3. Dispositif de transport, comprenant au moins un mouvant (20) qui comporte au moins un aimant (19), préférablement aimant permanent, et qui coopère avec une surface d'entraînement (13) de sorte que le mouvant (20) puisse être mu tel qu'il soit déplaçable et/ou tournable en au moins deux degrés de liberté par rapport à la surface d'entraînement (13),
où au moins un dispositif protectif (40) est pourvu qui est agencé entre la surface d'entraînement (13) et le mouvant (20),
**caractérisé en ce que** le dispositif protectif est réalisé comme bande mouvable et qu'au moins un moyen de mouvement (50) est destiné pour un mouvement du dispositif protectif (40) et/ou que le dispositif protectif (40) est réalisé en forme circonférentielle.

4. Dispositif selon l'une des revendications précédentes,
**caractérisé en ce que** le dispositif protectif (40) est réalisé de façon échangeable.

5. Dispositif selon l'une des revendications précédentes,
**caractérisé en ce qu'**au moins un moyen à fixement (62), en particulier au moins une aperture pour l'action d'une pression négative sur le dispositif protectif (40), est pourvu dans la région de la surface d'entraînement (13), où le dispositif protectif (40) peut être fixé par le biais dudit moyen à fixement (62).

6. Dispositif selon l'une des revendications précédentes,
**caractérisé en ce qu'**au moins un moyen à couper (52) est pourvu pour couper le dispositif protectif (40).

7. Dispositif selon la revendication 1 ou 6,
**caractérisé en ce qu'**au moins une bobine (56) et pourvue sur laquelle une partie du dispositif protectif (40) est enroulée, pendant que l'autre partie du dispositif protectif (40) couvre la surface d'entraînement (13) au moins partiellement.

8. Dispositif selon la revendication 1 ou 2 ou selon l'une des revendications 4 à 7 si dépendant de l'une des revendications 1 ou 2,
**caractérisé en ce qu'**au moins un mouvant (20) comprend des moyens pour mouvoir le dispositif protectif (40).

9. Dispositif selon la revendication 2 ou selon l'une des revendications 4 ou 5 si dépendant de la revendication 2,
**caractérisé en ce qu'**au moins un mouvant (20) comprend au moins un moyen à fixement (58) pour fixer le dispositif protectif.

10. Dispositif selon l'une des revendications précédentes,
**caractérisé en ce que** le dispositif protectif (40), en particulier sa surface, comprend un matériau qui est facilement à stériliser, préférablement un matériau synthétique, en particulier polyétherimide et/ou polyéthercétone et/ou polyétheréthercétone.

11. Dispositif selon l'une des revendications précédentes,
**caractérisé en ce que** la surface d'entraînement (13) comprend au moins une zone de stationnement (42) comportant des moyens capables d'exercer une force magnétique inférieure sur le mouvant (20).

12. Dispositif selon l'une des revendications précédentes,
**caractérisé en ce que** la surface d'entraînement (13) comprend au moins une zone de stationnement (42) qui n'est pas couverte du dispositif protectif (40).
